# EUROPEAN PATENT SPECIFICATION

(11) **EP 4 223 586 B1**
(45) Date of publication and mention of the grant of the patent: **01.01.2025**
(21) Application number: 22155161.7
(22) Date of filing: 04.02.2022
(51) Int. Cl.: B60N 2/75

(54) **ARMREST ASSEMBLY, IN PARTICULAR FOR VEHICLE SEATS**
ARMLEHNENANORDNUNG, INSBESONDERE FÜR FAHRZEUGSITZE
ENSEMBLE ACCOUDOIR, EN PARTICULIER POUR SIÈGES DE VÉHICULE

(43) Date of publication of application: 09.08.2023
(73) Proprietor: Martur Sünger Ve Koltuk Tesisleri Ticaret Ve Sanayi A.S, Sariyer Istanbul (TR)
(72) Inventor: BESTEPE, Onur, Istanbul (TR)
(74) Representative: Robba, Pierpaolo

(56) References cited:
- EP-A1- 3 098 110
- CN-A- 107 521 388
- FR-A1- 2 789 142

## Description

### Technical Field of the Invention

The present invention relates to an armrest assembly, suitable in particular for applications to vehicle seats.

More particularly, the present invention relates to an armrest assembly suitable for being used as central armrest for front seats in vehicles.

### Prior Art

In vehicle manufacturing, it is known to provide the rear seat bench and/or to the front seats with armrests, in order to allow the driver and the passengers to travel more comfortably.

In general, armrests are not fixedly mounted to the respective vehicles seats. Instead, they can pivot between an operative position, in which they extend in a direction substantially perpendicular to the seat backrest and they can offer support to the user's forearm, and a resting position, in which they extend in a direction substantially parallel to the seat backrest.

In case of application to the rear set bench, a recess can be provided in the bench backrest for receiving the armrest in its resting position. In case of application to the front seats, the armrest usually runs adjacent to the seat backrest when it is in such resting position.

In order to provide a customizable support to users having different morphologies, it is possible to envisage that the armrest can also stably assume one or more intermediate positions between the operative position and the rest position.

For instance, assuming that in the operative position the armrest is at 90° relative to the seat backrest, it is possible to envisage a plurality of intermediate positions in which the armrest is at an angle increasingly lower than 90° relative to the seat backrest.

To this purpose, the armrest carries first engaging means and a support mounted to the seat carries second engaging means, designed for cooperating with these first engaging means, so that the armrest can be locked in a plurality of different positions thanks to the engagement of these first and second engaging means.

For instance, the first engaging means can be implemented as a toothed portion on the armrest surface and the second engaging means can be made as a toothed rack arranged on the surface of the support, the teeth of said toothed portion meshing with the toothed rack on the support.

Preferably, the first and second engaging means are designed so as to allow an upwards rotation of the armrest relative to the support, while preventing a rotation of the armrest in the opposite, downwards direction.

In this way, starting from the operative position (which can also be seen as the lowermost position of the armrest), in which the armrest is substantially perpendicular to the seat backrest, the user can rotate the armrest upwards.

During upwards rotation, the armrest reaches one or more intermediate positions and at each of said intermediate positions engagement between the first and second engaging means locks the armrest against downwards rotation back towards the operative position, while leaving the armrest free to be further rotated upwards.

As a result, at each intermediate position the armrest is able to stably and comfortably bear the load of the user's forearm without rotating downwards.

In general, such intermediate positions are not uniformly distributed along the whole arc from the operative position to the resting position, since it is evident that having the armrest locked in an intermediate position close to the resting position (i.e. with the armrest slightly inclined with respect to the seat backrest) is not useful. Instead, a plurality of intermediate positions is usually provided close to the operative position, i.e. with the armrest inclined with respect to the seat backrest at angles slightly lower than 90°.

Since during use the user may wish to bring back the armrest to the operative position (lowermost position), it shall be possible to disengage the first and second engaging means from each other, so as to allow the user to rotate the armrest downwards when desired.

In general, a separate, manually operated actuating device is provided to this purpose, which is perceived as a drawback by many users.

In order to avoid this drawback, DE 102008030160 discloses an adjustable armrest including a locking device for locking the armrest in a plurality of supporting positions, in which such locking device can be actuated without the need of a separate, manually operated actuating device. Document FR2789142 discloses an adjustable armrest including a locking device.

In detail, DE 102008030160 discloses an armrest assembly including an armrest and a support mounted on the same rotation axis of the armrest. The support is made as a cam disc having a first circumferential section with a first radius and a second circumferential section with a second radius. The locking element for locking the armrest in the plurality of supporting positions is in engagement with the circumference of the cam disc via an actuating member, such as a sliding bolt, and the radii of the sections of the cam disc are selected so that when the actuating member is in contact with the first circumferential section of the cam disc, the locking element can engage a mating locking contour, whereas when the actuating member is in contact with the second circumferential section of the cam disc, the engagement between the locking element and the locking contour is excluded.

In order to allow the locking element to be disengaged when the armrest is pivoted upwards or downwards, the cam disc is pivotably mounted on the armrest rotation axis between two end stops: when the armrest is rotated upwards, the cam disc rests against the first end stop, so that the disengagement point resulting from the transition between the first and second circumferential sections of the cam disc is set at a first pivot angle correlated with the first cam disc end stop; when the armrest is pivoted downwards, the cam disc rests against the second end stop, so that the disengagement point results at a second, different pivot angle. As a result, the locking device is disengaged by pivoting the armrest without the need of a manual intervention by the user on a separate actuating device.

Even if the solution disclosed in DE 102008030160 allows to avoid the provision of a separate, manually operated actuating device, it still involves remarkable drawbacks.

In detail, such solution includes several moving components, which makes the armrest assembly construction complex.

More specifically, in the above solution the correct operation of the locking device is based on the cam disc correctly and precisely swiveling between the end stops.

This requires very precise tolerances during the manufacturing process.

Moreover, loosening or misalignment of the components due to wear can negatively affect the reliability of the locking device.

In addition, jamming of the cam disc, caused for instance by dust and dirt, can lead to a malfunctioning of the locking device.

The main object of the present invention is to overcome the above limitations, by providing an adjustable armrest assembly having a simpler construction and a more reliable operation. This and other objects are achieved by an armrest assembly as claimed in the appended claims.

### Summary of the invention

According to the present invention, the armrest assembly includes an armrest and a support, to which the armrest is pivotably mounted; the armrest is provided with first engaging means and the armrest assembly further includes a counterbody, fitted to the support and carrying second engaging means, designed for cooperating with said first engaging means; said first engaging means are carried by a carrier, which is mounted to the armrest and is provided with a driven member, such as a projecting stud.

As mentioned above, in the solution disclosed in DE 102008030160 a single cam element is provided, which is pivotable between two end stops, so that when the armrest is rotated in a first direction the cam element abuts against a first end stop and when the armrest is rotated in a second, opposite direction the cam element abuts against the second end stop. In order to avoid the need of providing a movable cam element, according to the present invention the armrest assembly includes two different driving elements.

Such driving elements are stationary and have different driving profiles.

Such driving elements are located at different positions with respect to the counterbody carrying the second engaging means and they are arranged in such a way that the path of the driven member mounted to the carrier is controlled by the driving profile of the first driving element when the armrest is rotated in a first direction and the path of said driven member is controlled by the driving profile of the second driving element when the armrest is rotated in a second, opposite direction.

By providing two different driving elements with driving profiles that are differently shaped and differently arranged relative to the counterbody, it is possible to set different disengagement points when the armrest is rotated in different directions.

In detail, the first engaging means and the second engaging means can be designed so as be able to engage each other in one or more of intermediate positions between the lowermost, operative positions of the armrest and the resting position of the armrest.

In case of upwards rotation of the armrest, the driving profile of the first driving element can be shaped and arranged so that contact between the carrier carrying the first engaging means and the counterbody carrying the second engaging means is prevented when the armrest is rotated beyond the uppermost intermediate position.

In case of downwards rotation of the armrest, the driving profile of the second driving element can be shaped and arranged so that contact between the carrier carrying the first engaging means and the counterbody carrying the second engaging means is prevented until the armrest is rotated to the lowermost, operative position.

Thanks to this arrangement, when the user rotates the armrest upwards starting from the lowermost, operative position, the armrest can be locked in each intermediate position and the user can advantageously select the most comfortable one.

On the other hand, when the user rotates the armrest downwards starting from the resting position the armrest smoothly rotates to the lowermost, operative position, without locking in any intermediate position.

In a preferred embodiment of the invention, the counterbody has a substantially circular outer surface and a first limit point, corresponding to the operative position of the armrest, and a second limit point, corresponding to the resting position of the armrest, can be defined on said outer surface. In other words, the armrest can pivot about the support and the counterbody between said first and second limit points.

A first surface section and a second surface section can be defined between the first and second limit points, the second engaging means being provided in the first surface section of the counterbody outer surface.

In this preferred embodiment, the first driving element is shaped and arranged so that the disengagement point when the armrest is rotated upwards substantially coincides with the transition point between the first surface section and the second surface section of the counterbody outer surface. In other words, when seen in the direction of the upwards rotation of the armrest, the first driving element has a driving profile that begins at the outer surface of the counterbody at the transition point between the first surface section and the second surface section of the counterbody outer surface, extends beyond the outer surface of the counterbody in the radial direction between said transition point and the second limit point and ends at the outer surface of the counterbody at said second limit point.

When the armrest is rotated downwards starting from the second limit point, the path of the driven member shall be controlled by the second driving element. To this purpose, the second driving element has a driving profile that, when seen in the direction of the downwards rotation of the armrest, starts at an intermediate position of the driving profile of the first driving element, extends beyond said driving profile of said first driving element in the radial direction and towards the first limit point in the circumferential direction and ends with a free end located close to the first limit point in the circumferential direction and far from the outer surface of the counterbody in the radial direction.

Thanks to the fact that the driving profile of the second driving element ends with a free end that is far from the outer surface of the counterbody in the radial direction, this second driving element will not affect the path of the driven member when, starting form the first limit point, the armrest is rotated upwards; instead, during the upwards rotation of the armrest, only the driving profile of the first driving element will control the path of the driven member.

Thanks to the arrangement of the present invention, the number of moving components is strongly limited, which makes the armrest assembly construction simple and robust, and its operation much more reliable than prior solutions known form the state of the art.

### Brief description of the drawings

Further features and advantages of the present invention will become more evident form the following description of a preferred embodiment, given by way of non-limiting example, with reference to the attached drawings, in which:
Figures 1a - 1c schematically show a seat provided with an adjustable armrest;
Figures 2a - 2e schematically show, in cross-sectional views, the armrest assembly according to the present invention, shown in different configurations.

### Description of apreferred embodiment of the invention

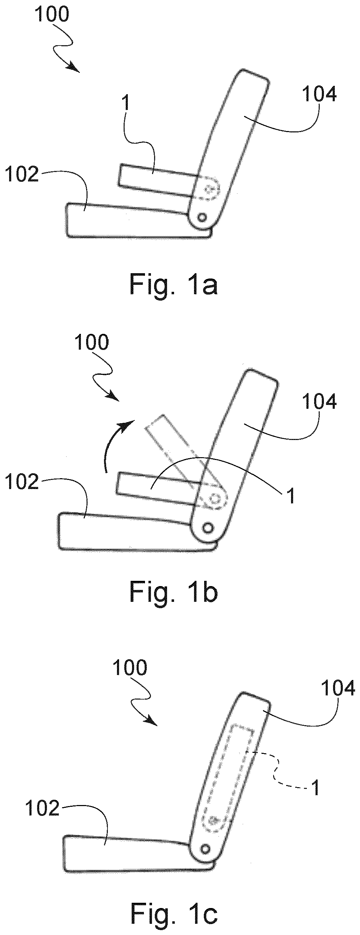

Figures 1a - 1c schematically show a vehicle seat provided with an adjustable armrest. In any case, it shall be evident to the person skilled in the art that the present invention is not limited to the automotive technical field and it could be applied to any kind of seat provided with one or more adjustable armrest(s).

In general, a vehicle seat 100 includes a seat cushion 102 and a seat backrest 104, and it can be provided with one or more armrests 1.

For instance, front vehicles seats are usually provided with one central armrest 1. Advantageously, such armrest 1 is pivotably mounted to a support which, in turn, is mounted to the vehicle seat (or to another fixed structure in the vehicle passenger compartment) so that it can assume different position.

More specifically, the armrest 1 can assume an operative position (see Figure 1a), in which it extends in a direction substantially perpendicular to the seat backrest 104 and it can support a user's forearm.

From such operative position, the armrest can be rotated upwards (see arrow F in Figure 1b) until it is brought to a resting position (see Figure 1c), in which it extends in a direction substantially parallel to the seat backrest 104 and runs adjacent to said seat backrest. Since different users have different morphologies, preferably the armrest 1 can be locked in one or more intermediate positions between the operative position (Figure 1a) and the resting position (Figure 1c), so that each user can select the most comfortable supporting position for his / her forearm.

More preferably, the armrest can be locked in one or more intermediate positions between the operative position and the resting position when it is rotated upwards form its lowermost, operative position towards its resting position, while it can be freely and smoothly rotated back to said lowermost, operative position when it is rotated downwards from its resting position. Indeed, it would be annoying for the user if the armrest became blocked at each intermediate position and it had to be disengaged from each of said intermediate positions when it is rotated downwards.

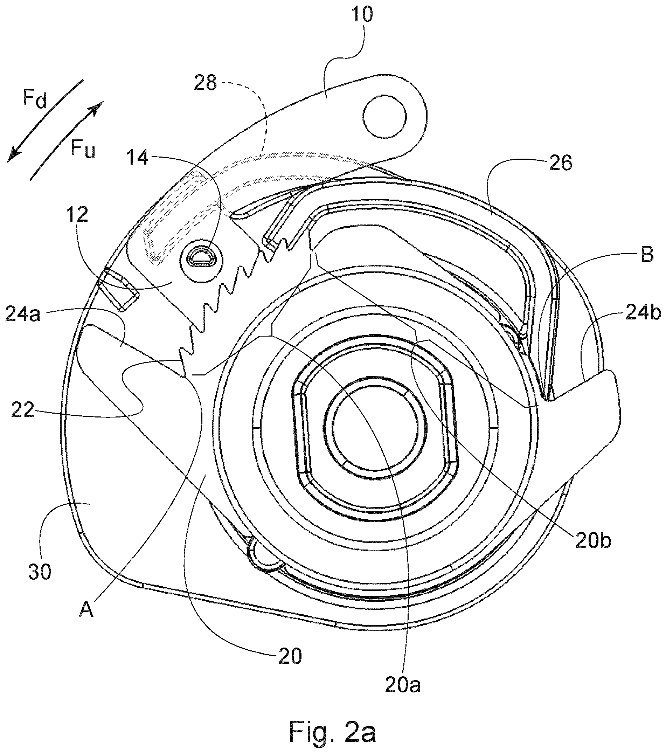

To this purpose, the armrest assembly according to the invention has the constructions schematically shown in Figures 2a - 2e.

The armrest assembly according to the invention includes an armrest (not shown in Figures 2a - 2e) and a support 30 which can be fixedly fastened to a vehicle seat (e.g. to the seat backrest) or to another fixed structure of the vehicle passenger compartment, the armrest being pivotably mounted to the support 30.

The armrest is provided with a carrier 10 provided with first engaging means 12. In the shown embodiment, such first engaging means are made as teeth 12.

The armrest assembly is further provided with a counterbody 20 which is fitted to the support 30 and is provided with second engaging means 22, intended to cooperate with said first engaging means 12.

In the shown embodiment, the second engaging means are made as a toothed rack 22 formed on the outer surface of the counterbody 20, so that the teeth 12 carried by the carrier 10 can mesh with the teeth of the toothed rack 22 on the counterbody 20.

Preferably, the teeth 12 and the toothed rack 22 are shaped so that meshing of said teeth with said toothed rack does not prevent an upwards rotation of the armrest relative to the support (arrow Fu in Figure 2a), while it blocks a downwards rotation of said armrest relative to said support (arrow Fd in Figure 2a).

In this way, the engagement between the teeth 12 of the carrier 10 and toothed rack 22 of the counterbody 20 allows to provide a stable support for the user's forearm, since a downwardly oriented rotation of the armrest is effectively prevented. At the same time, the user will be allowed to rotate the armrest upwards, towards the resting position of the armrest, without any effort.

As shown in Figures 2a - 2e, the carrier 10 is preferably provided with a plurality of teeth 12, so that the efforts exerted on the armrest are distributed on several teeth.

Moreover, the extension of the toothed rack 22 in the circumferential direction on the outer surface of the counterbody 20 is sufficiently long for allowing the teeth 12 of the carrier 10 to engage said toothed rack 22 in a plurality of different positions.

The lowermost engagement position between the teeth 12 of the carrier 10 and the toothed rack 22 of the counterbody 20 corresponds to the operative position of the armrest, as shown in Figure 1a.

The other engagement positions between the teeth 12 of the carrier 10 and the toothed rack 22 of the counterbody 20 while the armrest is rotated upwards (arrow Fu) correspond to as many intermediate positions, in which the armrest is blocked at angles increasingly lower than 90° relative to the seat backrest.

Thanks to the provision of such intermediate positions, each user can select the most comfortable supporting position for his / her forearm according to his / her own morphology. It is evident that, when the inclination between the armrest and the seat backrest drops below a given threshold angle, there is no advantages in providing further intermediate supporting positions.

Accordingly, a first limit point A and a second limit point B can be defined on the outer surface of the counterbody 20, the armrest being pivotable relative to the counterbody 20 between the first limit point A and the second limit point B.

When the carrier 10 of the armrest is at the first limit point A, the armrest is in its operative position, which is its lowermost position in which it extends in a direction substantially perpendicular to the vehicle backrest; when the carrier 10 of the armrest is at the second limit point B, the armrest is in its resting position, in which it runs in a direction substantially parallel to the vehicle backrest.

Advantageously a first abutting surface 24a, projecting from the outer surface of the counterbody 20 in a direction substantially perpendicular to said outer surface of said counterbody 20, can be provided at the first limit point A, so that the carrier abuts against such first abutting surface 24a when the armrest is in its lowermost, operative position and any further rotation of the armrest in the downwards direction (arrow Fd in Figure 2a) is prevented. Analogously, a second abutting surface 24b, projecting from the outer surface of the counterbody 20 in a direction substantially perpendicular to the outer surface of the counterbody 20, can be provided at the second limit point B, so that the carrier abuts against such second abutting surface 24b when the armrest is in its resting position and any further rotation of the armrest in the upwards direction (arrow Fu in Figure 2a) is prevented.

A first surface section 20a and a second surface section 20b can be defined in the outer surface of the counterbody 20 between the first limit point and the second limit point and the toothed rack 22 extends over the first surface section 20a (closer to first limit point A) only, while the second surface section 20b (closer to the second limit point B) is substantially smooth.

As mentioned above, in order to optimize the user's comfort it is desired that the armrest can be locked in each of the intermediate positions between the operative position and the resting position when it is rotated upwards form its lowermost, operative position towards its resting position, while it can be freely and smoothly rotated back to said lowermost, operative position when it is rotated downwards from its resting position.

In other words, it is desired to set the disengagement point between the carrier 10 on the armrest and the counterbody 20 (which means the point beyond which contact between said carrier and said counterbody is prevented) at two different locations depending on the direction of the armrest rotation.

According to the invention, this is achieved by providing a driven member 14 on the carrier 10 and two different driving element 26, 28 on the counterbody 20, so that when the armrest is rotated in a first direction (e.g. upwards), the path of the driven member 14 is controlled by the driving profile of the first driving element 26, while when the armrest is rotated in a second, opposite direction (e.g. downwards), the path of the driven member 14 is controlled by the driving profile of the second driving element 28.

The driven member 14 can be made, for instance, as a stud projecting form the surface of the carrier, preferably in a direction substantially perpendicular to the teeth 12.

By providing driving elements differently arranged relative to the counterbody 20 and having driving profiles with different shapes, it is possible to set the disengagement points between the carrier 10 on the armrest and the counterbody 20 at different locations depending on the direction of the armrest rotation.

In the preferred embodiment shown in the Figures, when the armrest is rotated upwards, the disengagement point between the carrier 10 on the armrest and the counterbody 20 substantially coincides with the transition point between the first surface section 20a and the second surface section 20b.

In other words, contact between the carrier 10 and the counterbody 20 is prevented when the armrest is rotated beyond the end of the toothed rack 22, i.e. beyond the uppermost intermediate position of the armrest.

Accordingly, the first driving element 26 has a driving profile that starts at the outer surface of the counterbody 20 at the transition point between the first surface section 20a and the second surface section 20b, extends beyond the outer surface of the counterbody 20 in the radial direction between said transition point and the second limit point B and ends at the outer surface of the counterbody 20 at said second limit point B.

As shown in Figure 2a, when the armrest is slightly rotated upwards from its operative position, contact between the carrier 10 and the counterbody 20 is allowed. As a consequence, the teeth 12 of the carrier 10 mesh with the toothed rack 22 of the counterbody 20, this blocking the armrest in an intermediate supporting position.

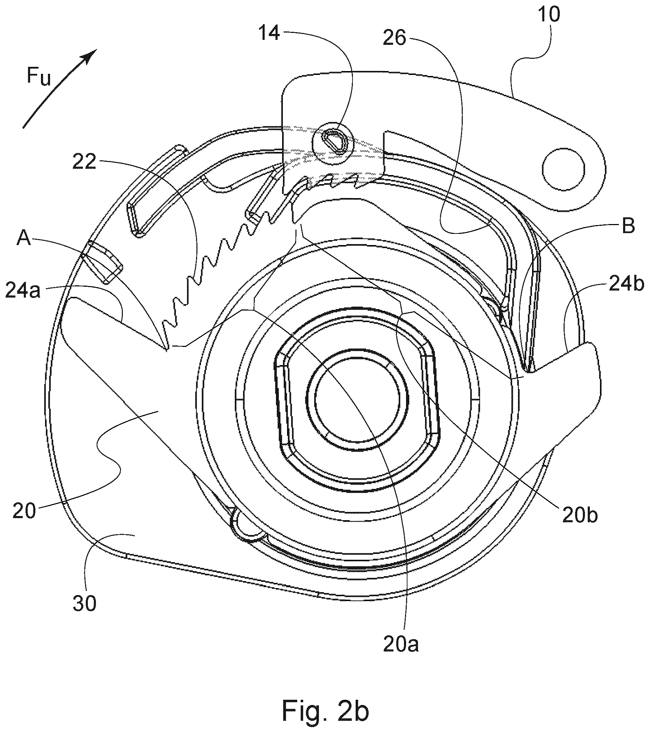

As shown in Figure 2b, when the armrest is further rotated upwards (arrow Fu in Figure 2b) and the carrier reaches the transition point between the first surface section 20a and the second surface section 20b, the projecting stud 14 on the carrier engages the driving profile of the first driving element.

As a result, the carrier 10 is pushed away from the counterbody 20 and any contact between said carrier and the outer surface of said counterbody is prevented.

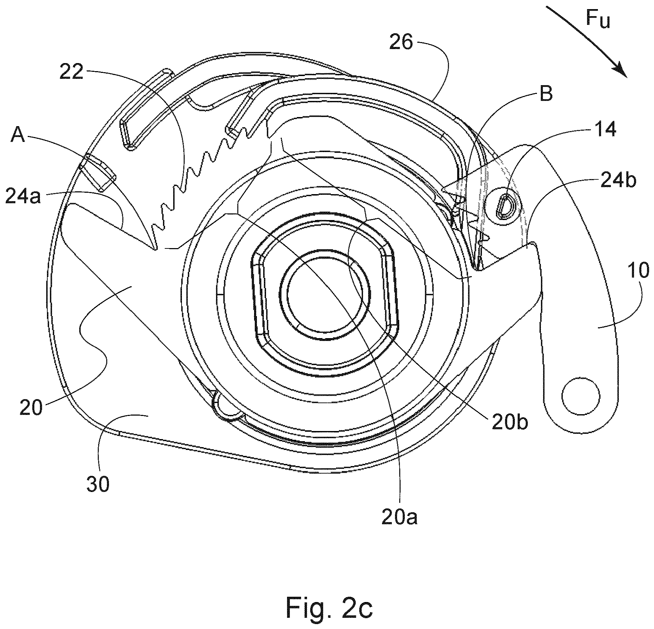

While the projecting stud 14 slides along the driving profile of the first driving element 26, the armrest smoothly rotates until reaching its resting position, as shown in Figure 2c.

In such position, thanks to the shape of the driving profile of the first driving element 26, the carrier 10 of the armrest is brought again close to the outer surface of the counterbody 20 and it rests against the second abutting surface 24b.

If, starting from this position, the path of the carrier were controlled by the first driving element 26 during downwards rotation of the armrest back to its operative position, the carrier 10 would contact the outer surface of the counterbody at the uppermost intermediate position and the armrest would be locked relative to the support at this position.

This would be very uncomfortable for the user, who wishes to smoothly rotate the armrest downwards till the operative position.

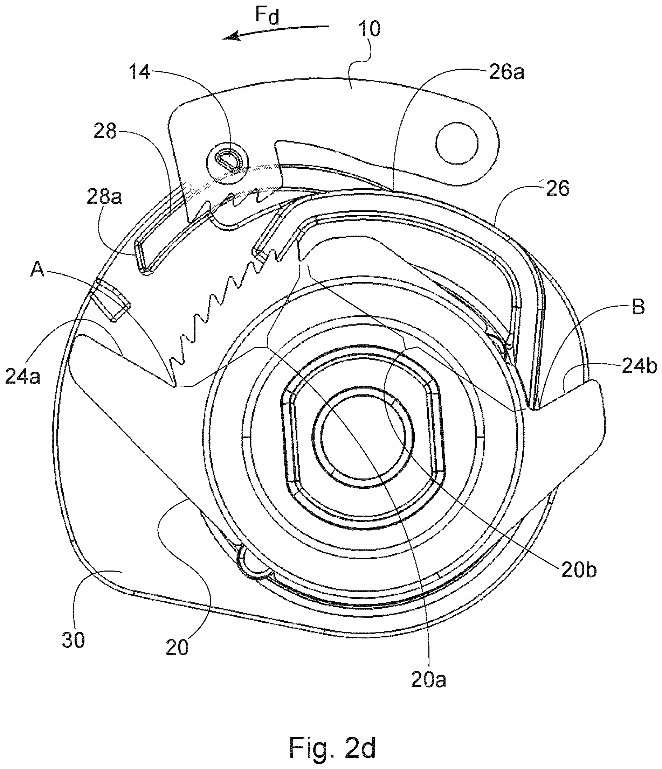

For this reason, when the armrest is rotated downwards from its resting position, the path of the driven member 14 of the carrier is controlled by the second driving element 28, as shown in Figure 2d.

The second driving element 28 has a driving profile that, starting from an intermediate position 26a of the driving profile of the first driving element 26, extends towards the first limit point in the circumferential direction of the counterbody 20, runs beyond said driving profile of said first driving element in the radial direction and ends with a free end 28a that is located close to the first limit point A in the circumferential direction and far from the outer surface of the counterbody 20 in the radial direction.

When, during downwards rotation (arrow Fd in Figure 2d), the projecting stud 14 reaches the aforesaid intermediate position 26a of the driving profile of the first driving element 26, it leaves said driving profile of said first driving element 26 and starts sliding along the driving profile of the second driving element 28.

As the projecting stud slides along the driving profile of the second driving element 28, the carrier 10 is kept away from the outer surface of the counterbody while the it rotates above the toothed rack 22.

As a result, during downwards rotation, the armrest is not blocked at the intermediate positions. Conversely, it smoothly rotates downwards until the driving stud 14 reaches the free end 28a of the driving profile of the second driving element 28.

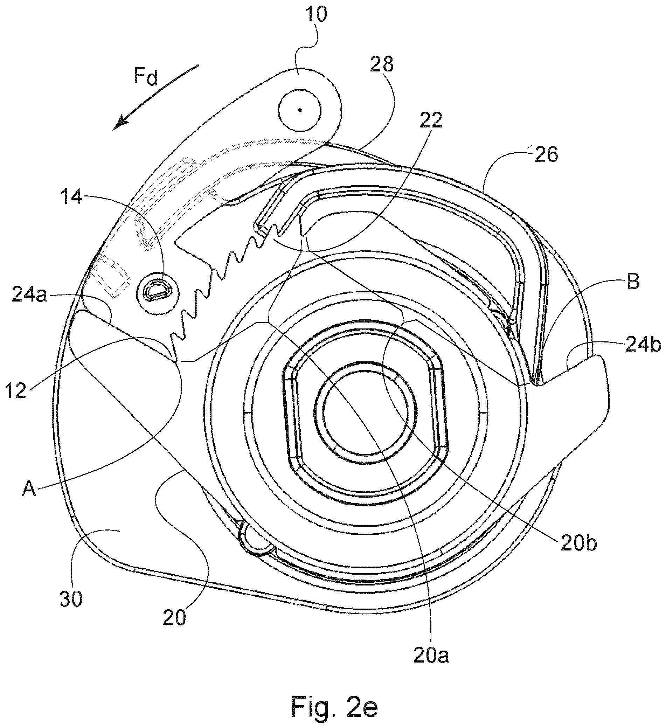

At this stage, the carrier 10 falls down against the outer surface of the counterbody 20, as shown in Figure 2e, and the armrest is locked in the lowermost, operative position.

It will be evident to the person skilled in the art that, since the second driving element 28 ends with the free end 28a, that is far from the outer surface of the counterbody 20 in the radial direction, when the armrest is rotated upwards again starting from the configuration shown in Figure 2e, this second driving element 28 will not engage the projecting stud 14 and it will not affect its path.

Advantageously, the second driving element 28 can be made as a resilient element, so that it bends towards the outer surface of the counterbody as the projecting studs approaches its free end 28a. In this way, the free end 28a will be closer to the outer surface of the counterbody 20 and the passage of the carrier 10 from the second driving element (Figure 2d) to the outer surface of the counterbody 20 (Figure 2e) will be smoother.

Moreover, by manufacturing the second driving element 28 using a highly resilient material, it can be advantageously obtained that said second driving element 28 does not hinder the movement of the carrier 10 along the first driving element 26 when when the armrest is rotated in a first direction.

Suitable materials for manufacturing the second driving element 28 include polyoxymethylene (POM) and similar materials.

It will be evident to the person skilled in the art that providing two different driving elements, differently arranged on the counterbody and having driving profiles with different shapes, allows to make both the counterbody and the driving elements themselves as stationary elements, thus dramatically reducing the moving parts in the armrest arrangement according to the invention.

It will be further evident to the person skilled on the art that the above described embodiment has been given by way of non-limiting example and several modifications and variants can be conceived without departing from the scope of the invention as defined in the appended claims.

## Claims

1. Armrest assembly including a support (30) and an armrest (1), pivotably mounted to said support (30), wherein said armrest is provided with a carrier (10) carrying first engaging means (12) and a counterbody (20) is fitted to said support (30) and is provided with second engaging means (22), said second engaging means (22) being intended to cooperate with said first engaging means (12), wherein said carrier is further provided with a driven member (14), **characterized in that** said counterbody is provided with a first driving element (26) and a second driving element (28), said first and second driving elements (26, 28) being differently arranged relative to said counterbody (20) and having driving profiles with different shapes, and **in that** the path of said driven member (14) is controlled by the driving profile of said first driving element (26) when said armrest is rotated in a first direction (Fu), while the path of said driven member 14 is controlled by the driving profile of said second driving element (28) when the armrest is rotated in a second, opposite direction (Fd).

2. Armrest assembly according to claim 1, wherein said counterbody (20), as well as said driving elements (26, 28), are stationary elements.

3. Armrest assembly according to claim 1 or 2, wherein said armrest is able to rotate relative to said support (30) and to said counterbody (20) mounted to said support between a first limit point (A) and a second limit point (B), wherein a first surface section (20a) and a second surface section (20b) are defined in the outer surface of said counterbody (20) between said first limit point (A) and said second limit point (B), and wherein said second engaging means (22) are provided in the said first surface section of said outer surface of said counterbody (20).

4. Armrest assembly according to claim 3, wherein the arrangement of said first driving element (26) relative to the outer surface of said counterbody (20) and the shape of the driving profile of said first driving element (26) are such that, when said armrest is rotated in said first direction, contact between said carrier (10) and said counterbody (20) and engagement of said first engaging means (12) with said second engaging means (22) are allowed when said armrest is rotated over said first surface section (20a), while they are prevented when said armrest is rotated over said second surface section (20b).

5. Armrest assembly according to claim 3 or 4, wherein the arrangement of said second driving element (28) relative to the outer surface of said counterbody (20) and to said first driving element (26) and the shape of the driving profile of said second driving element (28) are such that, when said armrest is rotated in said second direction, contact between said carrier (10) and said counterbody (20) and engagement of said first engaging means (12) with said second engaging means (22) are prevented when said armrest is rotated over said first surface section (20a) and over said second surface section (20b).

6. Armrest assembly according to claim 4, wherein said first driving element (26) has a driving profile that starts at the outer surface of the counterbody (20) at the transition point between said first surface section (20a) and said second surface section (20b), extends over said second surface section (20b) and towards said second limit point (B) in the circumferential direction and beyond said outer surface of said counterbody (20) in the radial direction, and ends at the outer surface of the counterbody (20) at said second limit point (B).

7. Armrest assembly according to claim 5, wherein said second driving element (28) has a driving profile that starts from an intermediate position (26a) of the driving profile said first driving element (26), extends towards said first limit point (A) in the circumferential direction and beyond said driving profile of said first driving element (26) in the radial direction and ends with a free end (28a) that is located close to said first limit point (A) in the circumferential direction and far from the outer surface of said counterbody (20) in the radial direction.

8. Armrest assembly according to claim 5, wherein said second driving element (28) is made as a resilient element.

9. Armrest assembly according to any of the preceding claims, wherein said driven member is made as a stud (14), projecting from said carrier and suitable for sliding on the driving profiles of said first and second driving elements (26, 28).

10. Armrest assembly according to any of claims 3 to 9, wherein a first abutting surface (24a), projecting from the outer surface of the counterbody (20) in a direction substantially perpendicular to the outer surface of said counterbody (20), is provided at said first limit point (A).

11. Armrest assembly according to any of claims 3 to 10, wherein a second abutting surface (24b), projecting from the outer surface of the counterbody (20) in a direction substantially perpendicular to the outer surface of said counterbody (20), is provided at said second limit point (B).

12. Armrest assembly according to any of the preceding claims, wherein said first engaging means are made as teeth (12), preferably as a plurality of teeth (12).

13. Armrest assembly according to claim 12, wherein said second engaging means are made as a toothed rack (22) formed on the outer surface of said counterbody (20), said teeth (12) carried by said carrier (10) being intended to mesh with the teeth of said toothed rack (22) on the outer surface of said counterbody (20).

14. Armrest assembly according to claim 13, wherein said teeth (12) carried by said carrier (10) and said toothed rack (22) on the outer surface of said counterbody (20) are shaped so that meshing of said teeth with said toothed rack does not prevent a rotation of said armrest relative to said support in said first direction (Fu), while it prevents a rotation of said armrest relative to said support in said second, opposite direction (Fd).

15. Armrest assembly according to claim 13 or 14, wherein said teeth (12) carried by said carrier (10) and said toothed rack (22) on the outer surface of said counterbody (20) are shaped so that said teeth can mesh with said toothed rack in a plurality of different relative positions.

## Patentansprüche

1. Armlehnen-Baugruppe, umfassend eine Halterung (30) und eine schwenkbar an der Halterung (30) angebrachte Armlehne (1), wobei die Armlehne mit einem Träger (10) versehen ist, der erste Eingriffsmittel (12) trägt, und ein Gegenkörper (20) an der Halterung (30) befestigt ist und mit zweiten Eingriffsmitteln (22) versehen ist, wobei die zweiten Eingriffsmittel (22) dazu bestimmt sind, mit den ersten Eingriffsmittel (12) zusammenzuwirken, wobei der Träger weiter mit einem angetriebenen Element (14) versehen ist, **dadurch gekennzeichnet, dass** der Gegenkörper mit einem ersten Antriebselement (26) und einem zweiten Antriebselement (28) versehen ist, wobei das erste und das zweite Antriebselement (26, 28) relativ zu dem Gegenkörper (20) unterschiedlich angeordnet sind und Antriebsprofile mit unterschiedlichen Formen aufweisen, und dass der Weg des angetriebenen Elements (14) durch das Antriebsprofil des ersten Antriebselements (26) gesteuert wird, wenn die Armlehne in eine erste Richtung (Fu) geschwenkt wird, und der Weg des angetriebenen Elements (14) durch das Antriebsprofil des zweiten Antriebselements (28) gesteuert wird, wenn die Armlehne in eine zweite, entgegengesetzte Richtung (Fd) geschwenkt wird.

2. Armlehnen-Baugruppe nach Anspruch 1, wobei es sich bei dem Gegenkörper (20) und den Antriebselementen (26, 28) um stationäre Elemente handelt.

3. Armlehnen-Baugruppe nach Anspruch 1 oder 2, wobei die Armlehne relativ zu der Halterung (30) sowie zu dem an der Halterung angebrachten Gegenkörper (20) zwischen einem ersten Grenzpunkt (A) und einem zweiten Grenzpunkt (B) schwenkbar ist, wobei sich ein erster Oberflächenabschnitt (20a) und ein zweiter Oberflächenabschnitt (20b) in der Außenfläche des Gegenkörpers (20) zwischen dem ersten Grenzpunkt (A) und dem zweiten Grenzpunkt (B) befinden, und wobei die zweiten Eingriffsmittel (22) in dem ersten Oberflächenabschnitt der Außenfläche des Gegenkörpers (20) vorgesehen sind.

4. Armlehnen-Baugruppe nach Anspruch 3, wobei die Anordnung des ersten Antriebselements (26) relativ zu der Außenfläche des Gegenkörpers (20) sowie die Form des Antriebsprofils des ersten Antriebselements (26) so beschaffen sind, dass, wenn die Armlehne in die erste Richtung geschwenkt wird, der Kontakt zwischen dem Träger (10) und dem Gegenkörper (20) sowie der Eingriff der ersten Eingriffsmittel (12) mit den zweiten Eingriffsmitteln (22) erlaubt werden, wenn die Armlehne über den ersten Oberflächenabschnitt (20a) geschwenkt wird, aber sie verhindert werden, wenn die Armlehne über den zweiten Oberflächenabschnitt (20b) geschwenkt wird.

5. Armlehnen-Baugruppe nach Anspruch 3 oder 4, wobei die Anordnung des zweiten Antriebselements (28) relativ zu der Außenfläche des Gegenkörpers (20) und dem ersten Antriebselement (26) sowie die Form des Antriebsprofils des zweiten Antriebselements (28) so beschaffen sind, dass, wenn die Armlehne in die zweite Richtung geschwenkt wird, der Kontakt zwischen dem Träger (10) und dem Gegenkörper (20) sowie der Eingriff der ersten Eingriffsmittel (12) mit den zweiten Eingriffsmitteln (22) verhindert werden, wenn die Armlehne über den ersten Oberflächenabschnitt (20a) und über den zweiten Oberflächenabschnitt (20b) geschwenkt wird.

6. Armlehnen-Baugruppe nach Anspruch 4, wobei das erste Antriebselement (26) ein Antriebsprofil aufweist, der an der Außenfläche des Gegenkörpers (20) am Übergangspunkt zwischen dem ersten Oberflächenabschnitt (20a) und dem zweiten Oberflächenabschnitt (20b) beginnt, über den zweiten Oberflächenabschnitt (20b) und in Umfangsrichtung zum zweiten Grenzpunkt (B) hin und in Radialrichtung über die Außenfläche des Gegenkörpers (20) hinaus verläuft und an der Außenfläche des Gegenkörpers (20) an dem zweiten Grenzpunkt (B) endet.

7. Armlehnen-Baugruppe nach Anspruch 5, wobei das zweite Antriebselement (28) ein Antriebsprofil aufweist, der von einer Zwischenposition (26) des Antriebsprofils des ersten Antriebselements (26) aus beginnt, in Umfangsrichtung zu dem ersten Grenzpunkt (A) hin und in Radialrichtung über den Antriebsprofil des ersten Antriebselement (26) hinaus verläuft und mit einem freien Ende (28a) endet, das sich in Umfangsrichtung in der Nähe des ersten Grenzpunkts (A) und in Radialrichtung von der Außenfläche des Gegenkörpers (20) entfernt befindet.

8. Armlehnen-Baugruppe nach Anspruch 5, wobei das zweite Antriebselement (28) als elastisches Element ausgeführt ist.

9. Armlehnen-Baugruppe nach einem der vorhergehenden Ansprüche, wobei das angetriebene Element als Bolzen (14) ausgeführt ist, der aus dem Träger herausragt und dazu geeignet ist, auf den Antriebsprofilen des ersten und zweiten Antriebselements (26, 28) zu gleiten.

10. Armlehnen-Baugruppe nach einem der Ansprüche 3 bis 9, wobei eine erste Anschlagfläche (24a), die aus der Außenfläche des Gegenkörpers (20) in einer im Wesentlichen senkrecht zu der Außenfläche des Gegenkörpers (20) verlaufenden Richtung herausragt, an dem ersten Grenzpunkt (A) vorgesehen ist.

11. Armlehnen-Baugruppe nach einem der Ansprüche 3 bis 10, wobei eine zweite Anschlagfläche (24b), die aus der Außenfläche des Gegenkörpers (20) in einer im Wesentlichen senkrecht zu der Außenfläche des Gegenkörpers (20) verlaufende Richtung herausragt, an dem zweiten Grenzpunkt (B) vorgesehen ist.

12. Armlehnen-Baugruppe nach einem der vorhergehenden Ansprüche, wobei die ersten Eingriffsmittel als Zähne (12) ausgeführt sind, vorzugsweise als eine Vielzahl von Zähnen.

13. Armlehnen-Baugruppe nach Anspruch 12, wobei die zweiten Eingriffsmittel als eine an der der Außenfläche des Gegenkörpers (20) angeformte Zahnstange (22) ausgeführt sind, wobei die von dem Träger (10) getragenen Zähne (12) dazu bestimmt sind, in die Zähne der an der Außenfläche des Gegenkörpers (20) angeformten Zahnstange (22) einzugreifen.

14. Armlehnen-Baugruppe nach Anspruch 13, wobei die von dem Träger (10) getragenen Zähne (12) und die an der der Außenfläche des Gegenkörpers (20) angeformte Zahnstange (22) so geformt sind, dass das Eingreifen dieser Zähne mit der Zahnstange ein Schwenken der Armlehne relativ zu der Halterung in die erste Richtung (Fu) nicht verhindert, aber ein Schwenken der Armlehne relativ zu der Halterung in die zweite, entgegengesetzte Richtung (Fd) verhindert.

15. Armlehnen-Baugruppe nach Anspruch 13 oder 14, wobei die von dem Träger (10) getragenen Zähne (12) und die an der der Außenfläche des Gegenkörpers (20) angeformte Zahnstange (22) so geformt sind, dass diese Zähne mit der Zahnstange in einer Vielzahl von verschiedenen relativen Positionen eingreifen können.

## Revendications

1. Ensemble d'accoudoir comprenant un support (30) et un accoudoir (1) monté de manière pivotante sur ce support (30), dans lequel cet accoudoir est pourvu d'un élément porteur (10) portant des premiers moyens d'engagement (12) et un élément porteur complémentaire (20) est monté sur ce support (30) et est pourvu de deuxièmes moyens d'engagement (22), ces deuxièmes moyens d'engagement (22) étant destinés à coopérer avec ces premiers moyens d'engagement (12), et dans lequel cet élément porteur est en outre pourvu d'un élément entraîné (14), **caractérisé en ce que** cet élément porteur complémentaire est pourvu d'un premier élément d'entraînement (26) et d'un deuxième élément d'entraînement (28), ces premier et deuxième éléments d'entraînement (26, 28) étant agencés par rapport à cet élément porteur complémentaire (20) de manière différente l'un par rapport à l'autre et étant pourvus de profils d'entraînement ayant des formes différentes, et **en ce que** la trajectoire de cet élément entraîné (14) est contrôlée par le profil d'entraînement de ce premier élément d'entraînement (26) lorsque cet accoudoir est tourné dans une première direction (Fu), tandis que la trajectoire de cet élément entraîné (14) est contrôlée par le profil d'entraînement de ce deuxième élément d'entraînement (28) lorsque l'accoudoir est tourné dans une deuxième direction opposée (Fd).

2. Ensemble d'accoudoir selon la revendication 1, dans lequel cet élément porteur complémentaire (20), ainsi que ces éléments d'entraînement (26, 28), sont des éléments fixes.

3. Ensemble d'accoudoir selon la revendication 1 ou 2, dans lequel cet accoudoir est apte à tourner par rapport à ce support (30) et à cet élément porteur complémentaire (20) monté sur ce support entre un premier point limite (A) et un deuxième point limite (B), dans lequel une première section de surface (20a) et une deuxième section de surface (20b) sont définies sur la surface extérieure de cet élément porteur complémentaire (20) entre ce premier point limite (A) et ce deuxième point limite (B), et dans lequel ces deuxièmes moyens d'engagement (22) sont prévus dans cette première section de surface de cette surface extérieure de cet élément porteur complémentaire (20).

4. Ensemble d'accoudoir selon la revendication 3, dans lequel l'agencement de ce premier élément d'entraînement (26) par rapport à la surface extérieure de cet élément porteur complémentaire (20) et la forme du profil d'entraînement de ce premier élément d'entraînement (26) sont tels que, lorsque cet accoudoir est tourné dans cette première direction, le contact entre cet élément porteur (10) et cet élément porteur complémentaire (20) et l'engagement de ces premiers moyens d'engagement (12) avec ces deuxièmes moyens d'engagement (22) sont autorisés lorsque cet accoudoir est tourné le long de cette première section de surface (20a), tandis qu'ils sont empêchés lorsque cet accoudoir est tourné le long de cette deuxième section de surface (20b).

5. Ensemble d'accoudoir selon la revendication 3 ou 4, dans lequel l'agencement de ce deuxième élément d'entraînement (28) par rapport à la surface extérieure de cet élément porteur complémentaire (20) et à ce premier élément d'entraînement (26) et la forme de ce profil d'entraînement de ce deuxième élément d'entraînement (28) sont tels que, lorsque cet accoudoir est tourné dans cette deuxième direction, le contact entre cet élément porteur (10) et cet élément porteur complémentaire (20) et l'engagement de ces premiers moyens d'engagement (12) avec ces deuxièmes moyens d'engagement (22) sont empêchés lorsque cet accoudoir est tourné le long de cette première section de surface (20a) et le long de cette deuxième section de surface (20b).

6. Ensemble d'accoudoir selon la revendication 4, dans lequel ce premier élément d'entraînement (26) a un profil d'entraînement qui commence à la surface extérieure de cet élément porteur complémentaire (20) au niveau du point de transition entre cette première section de surface (20a) et cette deuxième section de surface (20b), s'étend sur cette deuxième section de surface (20b) et vers ce deuxième point limite (B) dans la direction circonférentielle et au-delà de cette surface extérieure de cet élément porteur complémentaire (20) dans la direction radiale, et se termine à la surface extérieure de cet élément porteur complémentaire (20) au niveau de ce deuxième point limite (B).

7. Ensemble d'accoudoir selon la revendication 5, dans lequel ce deuxième élément d'entraînement (28) a un profil d'entraînement qui commence au niveau d'une position intermédiaire (26a) de ce profil d'entraînement de ce premier élément d'entraînement (26), s'étend vers ce premier point limite (A) dans la direction circonférentielle et au-delà de ce profil d'entraînement de ce premier élément d'entraînement (26) dans la direction radiale et se termine par une extrémité libre (28a) qui est située à proximité de ce premier point limite (A) dans la direction circonférentielle et éloigné de la surface extérieure de cet élément porteur complémentaire (20) dans la direction radiale.

8. Ensemble d'accoudoir selon la revendication 5, dans lequel ce deuxième élément d'entraînement (28) est réalisé sous la forme d'un élément élastique.

9. Ensemble d'accoudoir selon l'une quelconque des revendications précédentes, dans lequel cet élément entraîné est réalisé sous la forme d'un goujon (14), faisant saillie de cet élément porteur et apte à coulisser sur les profils d'entraînement de ce premier et ce deuxième élément d'entraînement (26, 28).

10. Ensemble d'accoudoir selon l'une quelconque des revendications 3 à 9, dans lequel une première surface de butée (24a), faisant saillie de la surface extérieure de cet élément porteur complémentaire (20) dans une direction sensiblement perpendiculaire à la surface extérieure de cet élément porteur complémentaire (20), est prévue au niveau de ce premier point limite (A).

11. Ensemble d'accoudoir selon l'une quelconque des revendications 3 à 10, dans lequel une deuxième surface de butée (24b), faisant saillie de la surface extérieure de cet élément porteur complémentaire (20) dans une direction sensiblement perpendiculaire à la surface extérieure de cet élément porteur complémentaire (20), est prévue au niveau de ce deuxième point limite (B).

12. Ensemble d'accoudoir selon l'une quelconque des revendications précédentes, dans lequel ces premiers moyens d'engagement sont réalisés sous forme de dents (12), de préférence sous forme d'une pluralité de dents (12).

13. Ensemble d'accoudoir selon la revendication 12, dans lequel ces deuxièmes moyens d'engagement sont réalisés sous forme d'une crémaillère (22) formée sur la surface extérieure de cet élément porteur complémentaire (20), ces dents (12) portées par cet élément porteur (10) étant destinées à s'engrener avec les dents de cette crémaillère (22) sur la surface extérieure de cet élément porteur complémentaire (20).

14. Ensemble d'accoudoir selon la revendication 13, dans lequel ces dents (12) portées par cet élément porteur (10) et cette crémaillère (22) formée sur la surface extérieure de cet élément porteur complémentaire (20) sont façonnées de telle sorte que l'engrènement de ces dents avec cette crémaillère n'empêche pas une rotation de cet accoudoir par rapport à ce support dans cette première direction (Fu), tandis qu'il empêche une rotation de cet accoudoir par rapport à ce support dans cette deuxième direction opposée (Fd).

15. Ensemble d'accoudoir selon la revendication 13 ou 14, dans lequel ces dents (12) portées par cet élément porteur (10) et cette crémaillère (22) formée sur la surface extérieure de cet élément porteur complémentaire (20) sont façonnées de telle sorte que ces dents peuvent engrener avec cette crémaillère dans une pluralité de positions relatives différentes.
